(19) Europäisches Patentamt / European Patent Office / Office européen des brevets

(11) **EP 2 180 353 B1**

(12) **EUROPEAN PATENT SPECIFICATION**

(45) Date of publication and mention
of the grant of the patent:
**07.09.2016 Bulletin 2016/36**

(21) Application number: **09013349.7**

(22) Date of filing: **22.10.2009**

(51) Int Cl.:
*G02B 1/08* (2006.01)     *G02B 5/30* (2006.01)

(54) **Process for producing polarizing element**

Verfahren zur Herstellung eines Polarisierungselements

Procédé de production d'un élément polarisant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **27.10.2008 JP 2008275489**
**04.11.2008 JP 2008283295**

(43) Date of publication of application:
**28.04.2010 Bulletin 2010/17**

(73) Proprietor: **Hoya Corporation**
**Tokyo (JP)**

(72) Inventors:
• **Yanagita, Hiroaki**
**Shinjuku-ku**
**Tokyo (JP)**

• **Itou, Minoru**
**Shinjuku-ku**
**Tokyo (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**EP-A1- 1 674 898      EP-A1- 2 259 101**
**WO-A1-2007/102514   JP-A- H0 996 702**
**JP-A- 2003 277 537    JP-A- 2005 352 303**

**Description**

**Field of the Invention**

The present invention relates to a process for producing a polarizing element. More particularly, the present invention relates to a process for producing a polarizing element in which the polarizing element can be produced in simple steps, and separation of the polarizing layer in the steps of the production can be prevented.

**Background Art**

Heretofore, when a polarizing layer in a polarizing element such as a polarizing lens is formed by aligning a dichroic coloring agent by deposition on an alignment film on the surface of a substrate, a film of silica ($SiO_2$) formed by vapor deposition has been considered to be suitable as the alignment film. For example, a polarizing element which comprises a polarizing layer and a protective layer disposed on the surface of a transparent substrate and an inorganic intermediate layer disposed between the transparent substrate and the polarizing layer as the alignment film, is proposed (for example, refer to Patent Literature 1). The inorganic intermediate layer comprises silicon oxide, a metal oxide or a mixture of silicon oxide and a metal oxide.

As the process without using the vacuum vapor deposition, a process for forming a polarizing coating film on the curved surface of a lens in which a flat plate and a lens are placed in a manner such that axes of the flat plate and the lens are placed at different positions, the spin coating with a polarizing solution is conducted while the polarizing solution is supplied at the center of the flat plate so that the polarizing solution makes a shear flow on the curved surface of the lens, and the polarizing solution is cured, is proposed (for example, refer to Patent Literature 2).

Citation List

Patent Literatures

[Patent Literature 1] Pamphlet of International Patent Publication No. 06/081006
[Patent Literature 2] Japanese Patent Application Publication (Tokuhyo) No. 2007-520739

Summary of the Invention

Technical Problem

When the alignment film is formed with an inorganic substance alone as described in Patent Literature 1, the alignment film can exhibit sufficient hardness. However, the hardness itself causes difficulty in working and, moreover, vapor deposition is required to form the layer with the inorganic substance. Therefore, a drawback arises in that steps in the production of the polarizing element are complicated, and the cost of production is increased.

When the layer comprises an inorganic substance alone, the layer has a coefficient of thermal expansion greatly different from that of the substrate, and cracks are formed in the heating treatment in the production process due to the difference in the coefficient of thermal expansion. The formation of cracks causes a problem in that haze appears on the polarizing element such as a lens.

In the process disclosed in Patent Literature 2, an adhesive primer layer which comprises a composition comprising polyethylene glycol (meth)acrylate or the like as the base material is formed on the curved surface of the lens before the spin coating with the polarizing solution is conducted. This primer layer comprises a composition substantially comprising components of organic substances. As described also in Patent Literature 1, when a film or a substrate used as the base for the polarizing layer is a material comprising an organic substance as the main component, a drawback arises in that the polarizing layer tends to be separated in the steps of production conducted later.

The present invention has been made under the above circumstances and has an object of providing a process for producing a polarizing element in which the polarizing element can be produced in simple steps, and separation of the polarizing layer in the steps of the production can be prevented.

Solution to Problem

As the result of intensive studies by the present inventors to achieve the above object, it was found that the above object could be achieved by forming an alignment layer of a polarizing element using a coating solution for an alignment film which was obtained by treating a mixture comprising an alkoxysilane and/or a hexaalkoxydisiloxane, water and an alcohol by heating under a specific condition. The present invention has been completed based on the knowledge.

The present invention provides a process for producing a polarizing element which comprises following Steps I to V:

Step I which comprises treating a mixture comprising (A) an alkoxysilane represented by following general formula (1) and/or a hexaalkoxydisiloxane represented by following general formula (2), (B) water and (C) an alcohol by heating at 40 to 120°C for 0.5 to 24 hours to prepare a coating solution for an alignment film,

$$Si(OR^1)_a(R^2)_{4-a} \qquad (1)$$

$$(R^3O)_3Si-O-Si(OR^4)_3 \qquad (2)$$

wherein $R^1$, $R^3$ and $R^4$ each independently represent an alkyl group having 1 to 5 carbon atoms, $R^2$ represents an alkyl group having 1 to 10 carbon atoms, and a represents a number of 3 or 4;
Step II which comprises coating a substrate with the coating solution for an alignment film prepared in step I to form a sol-gel film on the substrate;
Step III which comprises treating the sol-gel film by abrasion in a uniaxial direction to form an alignment layer having marks of abrasion in the uniaxial direction;
Step IV which comprises aligning a dichroic coloring agent by deposition on the alignment layer formed in step III to form a polarizing layer; and
Step V which comprises forming a protective layer for fixing the coloring agent on the polarizing layer formed in step IV.

Advantageous Effects of Invention

In accordance with the present invention, the polarizing element can be produced in simple steps, and separation of the polarizing layer in the steps of the production can be prevented.

Brief Description of Drawing

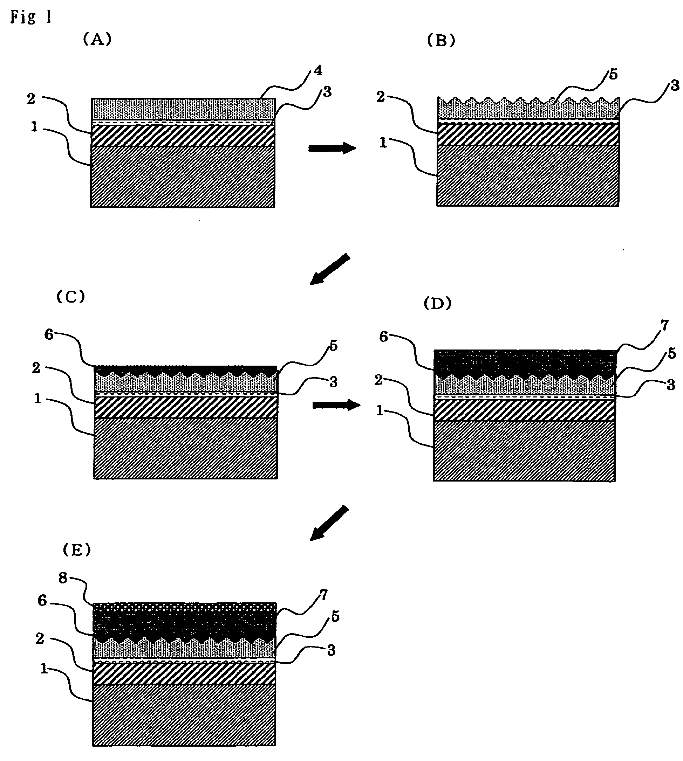

[Figure 1] Figure 1 shows a schematic sectional diagram exhibiting an embodiment of the steps in the process for producing a polarizing element of the present invention.

Description of Embodiments

The present invention will be described specifically in the following.
The construction of the polarizing element obtained in accordance with the present invention will be described with reference to Figure 1(E). The polarizing element in the present invention comprises an alignment layer 5 and a polarizing layer 6 disposed on a substrate 1. The polarizing layer 6 is formed by aligning a dichroic coloring agent by deposition. In general, a protective layer 7 for fixing the coloring agent is disposed on the polarizing layer 6. Where necessary, the polarizing element in the present invention may further comprise a hard coat layer 2 and a layer for tight adhesion 3 on the substrate 1 and a functional film 8 such as a water-repelling layer and the like on the protective layer 7 as shown in Figure 1(E). Preferable examples of the polarizing element include polarizing lenses using a lens substrate as the substrate 1.
The process for producing a polarizing element comprises following Steps I to V:

Step I which comprises treating a mixture comprising (A) an alkoxysilane represented by following general formula (1) and/or a hexaalkoxydisiloxane represented by following general formula (2), (B) water and (C) an alcohol by heating at 40 to 120°C for 0.5 to 24 hours to prepare a coating solution for an alignment film,

$$Si(OR^1)_a(R^2)_{4-a} \qquad (1)$$

$$(R^3O)_3Si-O-Si(OR^4)_3 \qquad (2)$$

wherein $R^1$, $R^3$ and $R^4$ each independently represent an alkyl group having 1 to 5 carbon atoms, $R^2$ represents an alkyl group having 1 to 10 carbon atoms, and a represents a number of 3 or 4;
Step II which comprises coating a substrate with the coating solution for an alignment film prepared in step I to form a sol-gel film on the substrate;

Step III which comprises treating the sol-gel film by abrasion in a uniaxial direction to form an alignment layer having marks of abrasion in the uniaxial direction;

Step IV which comprises aligning a dichroic coloring agent by deposition on the alignment layer formed in step III to form a polarizing layer; and

Step V which comprises forming a protective layer for fixing the coloring agent on the polarizing layer formed in step IV.

In Step I, as the first step, a mixture comprising (A) an alkoxysilane represented by the following general formula (1) and/or a hexaalkoxydisiloxane represented by the following general formula (2), (B) water and (C) an alcohol is prepared. The process for preparing the mixture is not particularly limited. The mixture can be prepared by weighing each component in each specific amount, followed by sufficiently mixing the components by stirring. The order of addition of the components is not particularly limited.

The alkoxysilane represented by the following general formula (1) and/or the hexaalkoxydisiloxane represented by the following general formula (2) of Component (A) forms a continuous skeleton structure in the film, provides the curing property to the film and is used for suppressing separation of the polarizing layer.

$$Si(OR^1)_a(R^2)_{4-a} \qquad (1)$$

$$(R^3O)_3Si-O-Si(OR^4)_3 \qquad (2)$$

$R^1$ in the above general formula (1) and $R^3$ and $R^4$ in the above general formula (2) each independently represent an alkyl group having 1 to 5 carbon atoms and may represent any of linear, branched and cyclic groups. Examples of the alkyl group include methyl group, ethyl group, n-propyl group, isopropyl group, n-butyl group, isobutyl group, sec-butyl group, tert-butyl group, pentyl group and cyclopentyl group. Among these groups, methyl group and ethyl group are preferable.

$R^2$ in the above general formula (1) represents an alkyl group having 1 to 10 carbon atoms. Examples of the alkyl group include groups described above as the examples of the alkyl groups having 1 to 5 carbon atoms, hexyl group, heptyl group, octyl group and 2-ethylhexyl group. Among these groups, methyl group, ethyl group, propyl group and butyl group are preferable. In the above general formula (1), a represents a number of 3 or 4;

Examples of the tetraalkoxysilane represented by general formula (1) in which a=4, include tetraethoxysilane (TEOS), tetramethoxysilane, tetraisopropoxysilane, tetra-n-propoxysilane, tetra-n-butoxysilane, tetra-sec-butoxysilane and tetra-tert-butoxysilane.

Examples of the trialkoxysilane represented by general formula (1) in which a=3, include methyltrimethoxysilane, methyltriethoxysilane, methyltriispropoxysilane, methyltri-n-propoxysilane, methyltri-n-butoxysilane, methyltri-sec-butoxysilane and methyltri-tert-butoxysilane.

The hexaalkoxydisiloxane represented by general formula (2) is not particularly limited. Examples of the hexaalkoxydisiloxane include hexamethoxydisiloxane and hexaethoxydisiloxane.

Among the above compounds, tetraethoxysilane, tetramethoxysilane, methyltrimethoxysilane, methyltriethoxysilane, tetraisopropoxysilane, methyltriisopropoxysilane, hexaethoxydisiloxane and hexamethoxydisiloxane are preferable, tetraethoxysilane, tetramethoxysilane, methyltrimethoxysilane and methyltriethoxysilane are more preferable, and tetraethoxysilane is most preferable. The above compound may be used singly or in combination of two or more. In the present invention, although, for example, an alkoxysilane having functional groups may be used as an alkoxysilane compound other than the compound of Component (A) in combination with Component (A) as long as the effect of the present invention is not adversely affected, it is preferable that the alkoxysilane having functional groups is not used from the standpoint of decreasing separation of the polarizing layer in the steps of production. Examples of the alkoxysilane having functional groups include trialkoxysilanes having glycidoxy group, epoxyalkylalkoxysilanes and alkoxysilanes having amino group which will be described below as examples of the material used for the protective layer.

In the present invention, it is preferable that the tetraalkoxysilane represented by general formula (1) in which a=4 is used singly or in an amount greater than other silane compounds.

Hydrolysis of the alkoxysilane and/or the hexalkoxydisiloxane of Component (A) proceeds in the presence of water. It is preferable that the amount of water of Component (B) added to the system is in the range of 0.5 to 3 mole equivalents and preferably in the range of 1 to 2 mole equivalents based on the amount of the alkoxysilane and the hexaalkoxydisiloxane used as Component (A). When the amount of water is 0.5 mole equivalents or greater based on the amount of Component (A), the alkoxyl group is not left remaining during the hydrolysis, and a film having a hardness durable in the use as the plastic lens can be formed. When the amount of water is 3 mole equivalents or smaller based on the amount of Component (A), there is no possibility of the following phenomenon: hardening of the film takes place to a degree greater than necessary due to polymerization among molecules of Component (A), the roughness of film is increased due to the increase in the size of each molecule of the polysiloxane formed by the hardening and, as a result, the hardness of the film sufficient for the film applied to a plastic lens cannot be obtained.

The process for adding water of Component (B) is not particularly limited. Water may be added as an aqueous solution of an acidic catalyst or an alkaline catalyst which is conventionally added to promote the hydrolysis.

The alcohol of Component (C) is used as the solvent which is compatible with the alkoxysilane and/or the hexaalkoxydisiloxane of Component (A) and water of Component (B).

Examples of the alcohol of Component (C) include methanol, ethanol, isopropanol, butanol, 2-methoxyethanol, diacetone alcohol and 1-methoxy-2-propanol. Among these alcohols, methanol, ethanol and isopropanol are preferable from the standpoint of the solubility of the silanes and the siloxanes in the alcohol.

It is preferable that the amount of the alcohol of Component (C) is in the range of 20 to 500% by mass and more preferably in the range of 50 to 400% by mass based on the amount of Component (A). When the amount of the alcohol of Component (C) is 20% by mass or greater based on the amount of Component (A), the ability of dissolving Component (A) is surely exhibited. When the amount of the alcohol of Component (C) is 500% by mass or smaller based on the amount of Component (A), the reactivity of Component (A) can be maintained.

Where desired, amides such as dimethylformamide and glycol ethers such as propylene glycol monomethyl ether may be used as the solvent as long as the effect of the present invention is not adversely affected.

The mixture comprising Components (A) to (C) prepared above is treated by heating under the condition of 40 to 120°C and 0.5 to 24 hours, and the coating solution for an alignment film can be prepared via polycondensation with hydrolysis of the alkoxyl group in the alkoxysilane material in accordance with the sol-gel process.

The temperature of the treatment by heating is in the range of 40 to 120°C, preferably in the range of 50 to 110°C and more preferably in the range of 70 to 110°C from the standpoint that the hydrolysis sufficiently proceeds while separation or gelation of Component (A) does not take place. From the standpoint of obtaining the sufficient reaction rate, it is preferable that the treatment by heating is conducted under stirring while the temperature is kept as high as possible. Therefore, it is preferable in the treatment by heating that the mixture comprising Components (A) to (C) is heated under the refluxing condition.

The time of the treatment by heating is in the range of 0.5 to 24 hours. It is preferable that the temperature of the heating is controlled so that the temperature is kept in the above range continuously for a prescribed time. When the temperature is kept high for an excessively long time, problems such as separation and gelation of Component (A) arise as described above. From this standpoint, it is preferable that the time of the treatment by heating is in the range of 1 to 15 hours.

Since the coating solution for an alignment film prepared by the treatment by heating as described above is used, improvement in tight adhesion between the alignment layer and the polarizing layer which are formed in later steps is made possible, and separation of the polarizing layer can be effectively decreased.

To decrease separation and haze of the polarizing layer, it is preferable that an aluminum chelate of Component (D) is added to the mixture obtained after the treatment by heating described above, where necessary, and the obtained mixture is further heated. Examples of the aluminum chelate of Component (D) include aluminum acetylacetonate, ethyl acetoacetate aluminum diisopropylate, aluminum tris(ethyl acetoacetate), alkyl acetoacetate aluminum diisopropylates, aluminum monoacetylacetonate bis(ethyl acetoacetate), aluminum tris(acetylacetonate) and aluminum monoisopropoxy monooleoxy ethyl acetoacetate. The aluminum chelate may be used singly or in combination of two or more.

It is preferable that the amount of the aluminum chelate of Component (D) is in the range of 0.05 to 5% by mass and more preferably 0.1 to 3% by mass based on the amount of Component (A). When the amount of the aluminum chelate of Component (D) is 0.05% by mass or greater based on the amount of Component (A), the effect of decreasing separation and haze can be provided. When the amount of the aluminum chelate of Component (D) is 5% by mass or smaller based on the amount of Component (A), the problem of decrease in adhesion or transparency due to an excessively great content of aluminum does not arise.

It is preferable that the temperature of the treatment by heating is in the range of 40 to 120°C and more preferably in the range of 50 to 100°C. It is preferable that the time of the treatment by heating is in the range of 0.5 to 24 hours. It is preferable that the treatment by heating is conducted under stirring.

It is preferable that the content of solid components in the coating solution for an alignment film is 0.2 to 20% by mass and more preferably 1 to 10% by mass. The content of solid components in the coating solution can be adjusted into the desired range using a solvent such as the alcohols described above as the examples. The content of solid components in the coating solution can be calculated in accordance with the method described below in Examples.

In Step II, a substrate is coated with the coating solution for an alignment film prepared in step I, and a sol-gel film is formed on the substrate (refer to Figure 1(A)). In this step, it is not necessary that a vacuum vapor deposition apparatus of a great scale is utilized unlike in conventional processes for forming a layer from an inorganic substance such as $SiO_2$ which require such an apparatus. Therefore, no complicated processes are used, and the steps of the production can be simplified.

(Substrate)

The substrate used in the present invention is not particularly limited. Examples of the substrate include plastic substrates and inorganic glass substrates. Examples of the material for the plastic substrate include thermoplastic resins such as polymethyl methacrylates, examples of which include homopolymers of methyl methacrylate and copolymers of methyl methacrylate with at least one other monomer, polyhydroxyethyl methacrylate, polycyclohexyl methacrylate, polycarbonates, polyamides, polystyrene, polyvinyl chloride, polyethylene terephthalate and polymethylpentene (the trade name: "PTX"; manufactured by MITSUI CHEMICALS, Inc.); homopolymers of diethylene glycol bisallylcarbonate, copolymers of diethylene glycol bisallylcarbonate with at least one other monomer, copolymers containing sulfur, copolymers containing halogens, unsaturated polyesters, polyurethanes, polythiourethanes and polymers using compounds having epithio group as the raw material.

The shape of the surface of the substrate is not particularly limited and may have any desired shape such as a flat shape, a concave shape and a convex shape.

In the present invention, when a lens substrate is used as the substrate and a material formed with a thermoplastic resin is used for the lens substrate, an advantage is exhibited in that the technology of injection molding is easily applied. A product obtained by application of the technology of injection molding has a property such that the birefringence is exhibited, and the function of polarization is occasionally adversely affected. In the case of the polarization lens of the present invention, when a thermoplastic resin is used for the lens substrate, a polarization lens exhibiting excellent properties can be produced without adverse effects on the function of polarization by disposing a polarizing layer on the face at the side of incidence of light.

In the case of a plastic lens for spectacles, since the face at the side of incidence of light has, in general, a convex shape, it is preferable that the polarizing layer is disposed on the face of the lens substrate at the side of incidence of light which has a convex shape. In other words, it is preferable in Step II that the face at the side of incidence of the lens substrate having a convex shape is coated with the coating solution for an alignment film prepared in Step I, and a sol-gel film is formed.

Examples of the thermoplastic resin include the thermoplastic resin described above as the examples. Among those resins, polymethyl methacrylate and polycarbonates are preferable, and polycarbonates are more preferable.

The shape of the face of the lens substrate at the side having no polarizing layer is not particularly limited and may have any desired shape such as a flat shape, a concave shape and a convex shape.

In the polarizing element of the present invention, an alignment layer is formed on the substrate. The alignment layer may be laminated directly on the substrate, or a hard coat layer and a primer layer may be formed between the substrate and the alignment layer.

The hard coat layer formed between the substrate and the alignment layer where necessary is not particularly limited, and a coating composition comprising a conventional organosilicon compound and colloid particles of an inorganic oxide can be used. Examples of the organosilicon compound and the colloid particles of an inorganic oxide include those described in paragraphs [0071] to [0074] of Japanese Patent Application Laid-Open No. 2007-77327. The coating composition for a hard coat layer can be prepared in accordance with a conventional process.

As the process for forming the hard coat layer on the substrate, the process of coating the substrate with the coating composition described above can be conducted. Examples of the process of the coating include conventional processes such as the dip coating process, the spin coating process and the spray coating process. Among these processes, the dip coating process and the spin coating process are preferable from the standpoint of the figure tolerance.

For the primer layer, conventional various resins such as polyurethanes can be used from the standpoint of improvement in the property for adhesion.

The property for adhesion between the substrate and the alignment layer can be improved by a surface treatment of the substrate before the substrate is coated with the coating solution. Examples of the surface treatment include chemical treatments such as treatments with acids, alkalis and various organic solvents, physical treatments such as treatments with plasma and ultraviolet rays, washing treatments using various cleaning agents, the sandblast treatment and the treatment with a primer using various resins.

By applying the solution to the substrate and, then, treating the formed film by heating, the substrate can be coated with the coating solution described above, and a sol-gel film can be formed. The process for applying the coating solution is not particularly limited, and a conventional process such as the spin coating process, the dip coating process, the flow coating process and the spray coating process can be used. Among these processes, the spin coating process is preferable from the standpoint of the figure tolerance.

It is preferable that the thickness of the sol-gel film is 0.02 to 5 $\mu$m and more preferably 0.05 to 0.5 $\mu$m. When the thickness is 0.02 $\mu$m or greater, separation of the entire film does not takes place in the treatment by abrasion, and the function as the alignment layer can be exhibited. When the thickness is 5 $\mu$m or smaller, formation of cracks can be suppressed.

The conditions of the coating and the treatment by heating are not particularly limited. For example, a time of coating in the range of 0.5 to 3 minutes is preferable as the condition of the coating. When the spin coating is conducted, a speed of rotation of the spin coater in the range of 200 to 2,000 rpm is preferable. It is preferable that the treatment by heating is conducted at 50 to 120°C for 0.5 to 3 hours.

It is preferable that the sol-gel film prepared in Step II is treated by dipping into an aqueous solution of a weak acid or a weak alkali after Step II has been conducted and before Step III is conducted. By treating the sol-gel film by dipping into an aqueous solution of a weak acid or a weak alkali, adhesion of the sol-gel film with the layer of a coloring agent is improved, and separation is suppressed. Moreover, scratch resistance is improved, and formation of haze due to scratches formed by the treatment by abrasion can be suppressed. In the above descriptions, a "weak acid" means an acid having a dissociation index $pK_a$ of 3.5 or greater, and a "weak alkali" means an alkali having a dissociation index $pK_b$ of 3.5 or greater.

Examples of the weak acid and the weak alkali used for the treatment by dipping include weak acids such as acetic acid, oxalic acid, formic acid and benzoic acid and weak alkalis such as aqueous ammonia, monoethanolamine, diethanolamine and triethanolamine. The condition of the treatment by dipping is not particularly limited. It is preferable that the time of the treatment is 1 to 30 minutes and more preferably 3 to 20 minutes.

In Step III, the surface of the sol-gel film prepared in step II is abraded in the uniaxial direction, and an alignment layer having marks of abrasion aligned in the uniaxial direction on the surface is formed so that a dichroic coloring agent can be aligned on the alignment layer by deposition (refer to Figure 1(B)). It is preferable that the treatment by abrasion is conducted using an abrasive.

In Step III, the alignment layer on the substrate is formed to align a dichroic coloring agent by deposition. The alignment layer comprises the sol-gel film obtained by forming a film by applying the coating solution for an alignment film to the substrate.

In the case of liquid crystals, it is known that, when a substrate is treated by friction or by abrasion in a prescribed direction, the liquid crystal are aligned in a direction specifically related to the prescribed direction. For example, it is well known that the step of rubbing in which an alignment film such as a film of a polyimide disposed on a substrate is rubbed in a specific direction to align the liquid crystals in the cell is conducted in the production of liquid crystal displays (LCD). The technology in which a substrate abraded in a specific direction is coated with a solution comprising a dichroic coloring agent so that the coloring agent is aligned and the dichroic property of the coloring agent is utilized, is disclosed in the specifications of the United States Patent Nos. 2400877 and 4865668.

In the present invention, the dichroic coloring agent can be aligned in the uniaxial direction through the treatment of the sol-gel film formed on the substrate by abrasion in a manner similar to alignment of liquid crystals in the production of liquid crystal displays (LCD).

The abrasive used for the treatment by abrasion is not particularly limited. For example, abrasives obtained by impregnating a cellular material such as a urethane foam with a slurry comprising particles of an abrasive can be used. Examples of the abrasive include $Al_2O_3$, $ZrO_2$, $TiO_2$ and $CeO_2$. Among these abrasives, $Al_2O_3$ is preferable from the standpoint of the hardness in abrasion of the formed sol-gel film (easiness of abrasion and condition after finishing) and chemical stability. The abrasive may be used singly or in combination of two or more. The slurry comprising particles of the abrasive may comprise viscosity modifiers and pH modifiers.

It is preferable that the average diameter of particles of the abrasive is smaller than 2 $\mu$m, more preferably 0.5 to 1.5 $\mu$m and most preferably 0.7 to 1.4 $\mu$m.

Since conventional thin films formed with inorganic substances such as thin films formed by vapor deposition of $SiO_2$ have a problem in that very finely controlled abrasion is difficult since the thin films are hard, and marks of abrasion are excessively rough for some applications such as spectacle lenses. In the present invention, the treatment by abrasion using an abrasive having an average particle diameter smaller than 2 $\mu$m is possible since the film is not so hard as thin films formed with inorganic substances. Moreover, since abrasives having finer particles than those of conventional abrasives can be used, still finer abrasion is made possible, and formation of haze due to marks of abrasion can be suppressed even when the pressure of abrasion is increased or the abrasion is concentrated at a limited portion. Therefore, production of products having poor quality can be suppressed, and the polarizing element can be produced easily.

The condition of the treatment by abrasion is not particularly limited. The speed of rotation, the pressure of abrasion and the time of abrasion can be suitably adjusted.

In Step IV, a dichroic coloring agent is deposited and aligned on the alignment layer having marks of abrasion in the uniaxial direction which is formed in step III, and a polarizing layer is formed (refer to Figure 1(C)).

The polarizing layer in the present invention comprises at least one dichroic coloring agent. "Dichroic" means the property such that the color of the transmitted light is different depending on the direction of transmission since the medium exhibits the anisotropic property in selective absorption of light. The dichroic coloring agent exhibits the property such that the absorption of light is great in a specific direction of the molecule of the coloring agent and small in the direction perpendicular to this specific direction when polarized light is applied. It is known that some of the dichroic coloring agents are in the liquid crystalline condition in specific ranges of the concentration and the temperature when water is used as the solvent. The liquid crystalline condition described above is called the "lyotropic liquid crystalline" condition. When the molecules of the coloring agent can be aligned in a specific direction utilizing the liquid crystalline condition of the dichroic coloring agent described above, exhibition of the dichroic property to a greater degree is made possible.

The dichroic coloring agent used in the present invention is not particularly limited, and dichroic coloring agents conventionally used for polarizing elements can be used. Examples of the dichroic coloring agent include azo-based coloring agent, anthraquinone-based coloring agents, merocyanine-based coloring agents, styryl-based coloring agents, azomethine-based coloring agents, quinone-based coloring agents, quinophthalone-based coloring agents, perylene-based coloring agents, indigo-based coloring agents, tetrazine-based coloring agents, stilbene-based coloring agent, and benzidine-based coloring agents. Examples of the dichroic coloring agent further include coloring agents described in the specifications of the United States Patent No. 2400877 and Japanese Patent Application Publication (Tokuhyo) No. 2002-527786.

In general, the surface of the alignment layer obtained after the treatment by abrasion is completely cleaned and dried before the polarizing layer is formed. Then, an aqueous solution or a suspension (preferably an aqueous solution) comprising the dichroic coloring agent is applied on the alignment layer having marks of abrasion. The dichroic coloring agent is treated to make the agent insoluble in water, and the polarizing layer can be formed.

A polarizing coloring agent exhibiting a desired hue can be prepared by adding coloring agents other than those described above to the aqueous solution or the suspension comprising the dichroic coloring agent as long as the effect of the present invention is not adversely affected. From the standpoint of improving properties such as the property for coating, where necessary, additives such as agents modifying rheology, agents promoting the adhesive property, plasticizers and leveling agents may be added.

The process for coating is not particularly limited. Examples of the process for coating include conventional processes such as the spin coating process, the dip coating process, the flow coating process and the spray coating process.

As the treatment to make the dichroic coloring agent insoluble in water, it is preferable that the dichroic coloring agent coating the alignment layer is dipped into an aqueous solution of a metal salt. The metal salt used for the treatment is not particularly limited. Examples of the metal salt include $AlCl_3$, $BaCl_2$, $CdCl_2$, $ZnCl_2$, $FeCl_2$ and $SnCl_3$. Among these metal salts, $AlCl_3$ and $ZnCl_2$ are preferable from the standpoint of the safety. After the treatment to make the agent insoluble in water, the surface of the dichroic coloring agent may be dried.

The thickness of the polarizing layer is not particularly limited. It is preferable that the thickness is in the range of 0.05 to 0.5 $\mu$m.

In Step V, a protective layer for fixing the coloring agent is formed on the polarizing layer formed in step IV (refer to Figure 1(D)).

As the material for forming the protective layer described above, organosilicon compounds can be used. Preferable examples of the organosilicon compound include trialkoxysilanes having glycidoxy group such as $\gamma$-glycidoxy-propyltrimethoxysilane ($\gamma$-GPS) and $\gamma$-glycidoxypropyl-methyldiethoxysilane; epoxyalkylalkoxysilanes such as $\beta$-(3,4-epoxy-cyclohexyl)ethyltrimethoxysilane, $\beta$-(3,4-epoxycyclohexyl)ethyltriethoxysilane, $\beta$-(3,4-epoxycyclohexyl)ethyl-tripropoxysilane, $\beta$-(3,4-epoxy-cyclohexyl)ethyltributoxysilane, $\gamma$-(3,4-epoxycyclohexyl)propyltrimethoxysilane, $\gamma$-(3,4-epoxycyclohexyl)propyltriethoxysilane, $\delta$-(3,4-epoxy-cyclohexyl)butyltrimethoxysilane and $\delta$-(3,4-epoxycy-clohexyl)butyl-triethoxysilane; alkoxysilanes having amino group such as N-($\beta$-aminoethyl)-$\gamma$-aminopropyltrimethoxysi-lane, N-($\beta$-aminoethyl)-$\gamma$-aminopropylmethyldimethoxysilane, $\gamma$-aminopropylmethyldimethoxysilane, $\gamma$-aminopropyl-methyldiethoxysilane, $\gamma$-aminopropyltrimethoxysilane, $\gamma$-amiopropyltriethoxysilane and N-($\beta$-aminoethyl)-$\gamma$-aminopropyl-methyldiethoxysilane. However, the organosilicon compound is not limited to the compounds described above as the examples. The organosilicon compound may be used singly or in combination of two or more.

The protective layer can be formed by coating the polarizing layer with a solution comprising the organosilicon compound described above in accordance with a conventional process such as the dip coating process, the spin coating process and the spray coating process, followed by curing the formed coating layer by heating to form a film. In this process, the organosilicon compound described above penetrates into the polarizing layer, and a layer in which the protective layer for the coloring agent and the polarizing layer are substantially integrated into a single layer is formed. The thickness of the layer in which the protective layer for the coloring agent and the polarizing layer are substantially integrated into a single layer is not particularly limited. It is preferable that the thickness is in the range of 0.05 to 1 $\mu$m.

On the obtained polarizing element, a hard coat film for improving the scratch resistance and functional films such as an antireflection film, a film repelling water, a film absorbing ultraviolet rays, a film absorbing infrared rays, a photochromic film and an antistatic film may be formed in accordance with a conventional process (refer to Figure 1(E)).

In accordance with the process described above, the polarizing element exhibiting excellent quality can be produced in simple steps. The polarizing element of the present invention is widely used for optical applications such as spectacle lenses, sun glasses, goggles, display instruments, light transfer instruments, window panes of buildings and window of automobiles. In particular, the polarizing element is advantageously used for polarizing lenses and, in particular, for plastic lenses for spectacles. When the polarizing element is used for plastic lenses for spectacles, the refractive index is, in general, 1.50 to 1.80, and the Abbe number is, in general, 30 or greater.

Examples

The present invention will be described more specifically with reference to examples in the following. However, the present invention is not limited to the examples. The physical properties of the obtained polarizing element were evaluated as described in the following.

(1) Degree of polarization

The degree of polarization was evaluated by obtaining the parallel transmittance ($T_{//}$) and the perpendicular transmittance ($T_\perp$), followed by calculation in accordance with the following equation in accordance with the method of ISO 8980-3. The parallel transmittance and the perpendicular transmittance were measured using a spectrophotometer for visible light and a polarizer.

$$P_{eff} = [(T_{//} - T_\perp)/(T_{//} + T_\perp)] \times 100$$

(2) Transparency (haze value)

The haze value of a prepared polarizing element was measured using a haze meter MH-150 manufactured by COLOR RESEARCH LABORATORY Co., Ltd., and the presence or the absence of haze was examined.

(Criterion for the evaluation)

excellent: haze value < 0.4%
good: 0.4% $\leqq$ haze value < 1.0%
fair: 1.0% $\leqq$ haze value < 2.0%
poor haze value $\geqq$ 2.0%

(3) Property for preventing separation of polarizing layer

When a protective layer for fixing the coloring agent was formed, the property for preventing separation was evaluated as poor when separation of the polarizing layer (the layer of a coloring agent) was found on the face of a polarizing element by visual observation, and the property for preventing separation was evaluated as good when the separation was not found.

(4) Unevenness of transmission of polarized light

The entire face of a polarized lens at the convex side was irradiated with linearly polarized light, and the position of the axis of absorption of polarized light of the lens was adjusted by rotating the lens so that the axis of absorption of polarized light was placed at the same position as the axis of the linearly polarized light. The face of the lens at the side of the concave face was visually observed, and the unevenness of transmission of polarized light was evaluated in accordance with the following criterion:

excellent: no unevenness (difficulty in finding unevenness)
good: almost no unevenness (slight unevenness by close observation)
fair: some unevenness found (unevenness not significant but easily found)
poor: unevenness found (unevenness of brightness clearly found on the face of the lens by visual observation)

Example 1

(Preparation of a coating solution for an alignment film)

To 85 g of tetraethoxysilane (TEOS) (the molecular weight: 208.3; the trade name: "KBE-04"; manufactured by SHIN-ETSU CHEMICAL Co., Ltd.), 40 g of ethanol was added, and the resultant mixture was stirred. Then, 14.75 g of 0.01 mole/liter hydrochloric acid (containing water in an amount by mole twice the amount by mole of TEOS) was added under stirring, and the resultant fluid was stirred for 5 minutes until the fluid became transparent.

The mixed solution prepared above was placed into a round bottom flask equipped with a condenser and heated under the refluxing condition for 1 hour by heating the flask by a mantle heater while water at the room temperature was passed through the condenser. During the heating, the solution was stirred, and the temperature of the solution was kept at 75 to 80°C. The obtained solution was left standing and cooled to the room temperature over 1 hour, and a raw solution for an alignment film was obtained. To 5 g of the obtained raw solution for an alignment film, 30 g of ethanol was added to dilute the raw solution. The diluted solution was stirred, and Coating solution for an alignment film 1 (the content of solid components: 2.5% by mass based on the amount of the entire coating solution) was obtained.

As for the solid components, the stoichiometric amount of substances obtained when the alkoxyl group (OR group; R: an alkyl group) in the alkoxysilane material was entirely hydrolyzed to form the siloxane bond (Si-O-Si bond) was used as the amount of "solid components".

(Preparation of an alignment film)

Using PHENIX LENS (manufactured by HOYA Corporation; the refractive index: 1.53; attached with a hard coat layer; the diameter: 70 mm; the base curve: 4) as the lens substrate, the concave face of the lens substrate was coated with Coating solution for an alignment film 1 in accordance with the spin coating process (about 2 ml of the solution supplied at 800 rpm, and the lens substrate kept being rotated for 60 minutes). Then, the formed coating layer was treated by heating at 85°C for 1 hour to cure the coating layer, and an alignment film (a sol-gel film) having a thickness of about 100 nm was prepared.

(Treatment by abrasion)

The obtained alignment film was treated by uniaxial abrasion at a rotation speed of 350 rpm under an abrasion pressure of 50 g/cm$^2$ for 10 seconds using a urethane foam containing an abrasive (the abrasive: "POLIPLA 304M"; manufactured by FUJIMI Incorporated; particles of $Al_2O_3$ having an average particle diameter of 0.85 $\mu$m; a urethane foam having a shape having a curvature approximately the same as that of the concave face of the spherical lens]. The lens treated by abrasion was washed with pure water and dried.

(Formation of a polarizing layer)

After the lens was dried, the surface of the lens treated by abrasion was coated with 2 to 3 g of an about 5% by mass aqueous solution of a dichroic coloring agent [the trade name: "VARILIGHT SOLUTION 2S"; manufactured by STERLING OPTICS Inc.] in accordance with the spin coating process, and a polarizing layer was formed. The spin coating was conducted in accordance with the following procedures: the aqueous solution of the coloring agent was supplied while the lens was rotated at a speed of 300 rpm, the lens was kept being rotated for 8 seconds, the aqueous solution of the coloring agent was supplied while the lens was rotated at a speed of 400 rpm, the lens was kept being rotated for 45 seconds, the aqueous solution of the coloring agent was supplied while the lens was rotated at a speed of 1,000 rpm, and the lens was kept being rotated for 12 seconds.

Separately, an aqueous solution containing 0.15 M of iron chloride and 0.2 M of calcium hydroxide and having a pH of 3.5 was prepared. The lens treated above was dipped into the aqueous solution prepared above for about 30 seconds, taken out of the solution and sufficiently washed with pure water. The coloring agent soluble in water was converted into an agent hardly soluble in water by this treatment.

(Formation of a film for protecting the coloring agent)

The lens treated as described above was dipped into a 10% by mass aqueous solution of γ-aminopropyltriethoxysilane for 15 minutes, washed with pure water three times and cured by heating at 85°C for 30 minutes. After the lens was cooled, the lens was dipped into a 2% by mass aqueous solution of γ-glycidoxypropyltrimethoxysilane for 30 minutes under the atmosphere of the air, cured by heating in an oven at 100°C for 30 minutes and cooled after the curing, and a film for protecting the coloring agent was formed.

The degree of polarization, the transparency and the property for preventing separation of the polarizing layer of the obtained polarizing lens were evaluated. The obtained polarizing lens exhibited a degree of polarization as great as 99.7%. The haze value was 1.2%, and no significant haze was found. No separation was found. The results are shown in Table 1.

Example 2

(Preparation of a coating solution for an alignment film)

Into a round bottom flask covered with an insulating material on the entire face except tubular portions, 85 g of tetraethoxysilane (TEOS) (the molecular weight: 208.3; the trade name: "KBE-04"; manufactured by SHIN-ETSU CHEMICAL Co., Ltd.), 40 g of ethanol and 14.75 g of a 0.01 mole/liter hydrochloric acid (containing water in an amount by mole twice the amount by mole of TEOS) were placed and mixed under stirring. During the stirring, heat was generated from the mixed solution due to water in hydrochloric acid to elevate the temperature at 50°C, and the hydrolysis proceeded. After the temperature was elevated, the stirring was continued, and the temperature was maintained for about 2.5 hours with the insulating material. After the reaction was completed, the temperature of the mixed solution started to decrease. The flask was left standing while the flask was covered with the insulating material so that the temperature was allowed to decrease slowly. The temperature was lowered to the room temperature, and a raw solution for an alignment film was obtained. To 5 g of the raw solution for an alignment film prepared as described above, 30 g of ethanol was added to dilute the raw solution. The diluted solution was stirred, and Coating solution for an alignment film 2 (the content of solid components: 2.5% by mass based on the amount of the entire coating solution) was obtained.

Then, the same procedures as those conducted in Example 1 were conducted except that Coating solution for an alignment film 2 was used as the coating solution for an alignment film, and a polarizing lens was prepared.

The degree of polarization, the transparency and the property for preventing separation of the polarizing layer of the obtained polarizing lens were evaluated. The obtained polarizing lens exhibited a degree of polarization as great as 99.5%. The haze value was 1.5%, and no significant haze was found. No separation was found. The results are shown in Table 1.

Example 3

(Preparation of a coating solution for an alignment film)

To a solution obtained by heating under refluxing condition in accordance with the same procedures as those conducted in Example 1, 1.4 g of aluminum acetylacetonate (1% by mass based on the amount of the raw solution for an alignment film) was added, and the resultant mixture was stirred sufficiently. After the obtained solution was stirred for 4 hours while the solution was kept at 50°C, the solution was cooled to the room temperature, and a raw solution for an alignment film was obtained. To 5 g of the obtained raw solution for an alignment film, 30 g of ethanol was added to dilute the raw solution. The diluted solution was stirred, and Coating solution for an alignment film 3 (the content of solid components: 2.5% by mass based on the amount of the entire coating solution) was obtained.

Then, a polarizing lens was prepared in accordance with the same procedures as those conducted in Example 1 except that Coating solution for an alignment film 3 was used as the coating solution for an alignment film.

The obtained polarizing lens exhibited a degree of polarization as great as 99.5%. The haze value was 0.65%, and no significant haze was found. No separation was found.

Example 4

A polarizing lens was prepared in accordance with the same procedures as those conducted in Example 1 except that, after the formation of an alignment film on the substrate in accordance with the same procedures as those conducted in Example 1 and before the following step of the treatment by abrasion, the substrate having the alignment film was dipped into a 10% by mass acetic acid aqueous solution for 15 minutes, taken out of the solution, washed with pure water, dried and treated by abrasion in accordance with the same procedures as those conducted in Example 1.

The obtained polarizing lens exhibited a degree of polarization as great as 99.4%. The haze value was 0.62%, and no significant haze was found. No separation was found. The results are shown in Table 1.

Example 5

A polarizing lens was prepared in accordance with the same procedures as those conducted in Example 4 except that Coating solution for an alignment film 3 prepared in Example 3 was used in place of Coating solution for an alignment film 1.

The obtained polarizing lens exhibited a degree of polarization as great as 99.7%. The haze value was 0.35%, and no haze was found. No separation was found. The results are shown in Table 1.

Example 6

A polarizing lens was prepared in accordance with the same procedures as those conducted in Example 5 except that a 28% by mass aqueous ammonia was used in place of the aqueous solution of acetic acid used in the dipping treatment of the substrate having the alignment film in Example 5. The obtained polarizing lens exhibited a degree of polarization as great as 99.7%. The haze value was 0.35%, and no haze was found. No separation was found. The results are shown in Table 1.

Examples 7 to 9

Polarized lenses were prepared in accordance with the same procedures as those conducted in Example 2 except that, in the step of preparation of a coating solution for an alignment film, one of 62.1 g of tetramethoxysilane (Example 7; "KBM-04"; a trade name of a product manufactured by SHIN-ETSU CHEMICAL Co., Ltd.), 55.6 g of methyltrimethoxysilane (Example 8; "KBM-13"; a trade name of a product manufactured by SHIN-ETSU CHEMICAL Co., Ltd.) and 72.7 g of methyltriethoxysilane (Example 9; "KBE-13"; a trade name of a product manufactured by SHIN-ETSU CHEMICAL Co., Ltd.) was used in place of tetraethoxysilane used in Example 2, and Coating solutions for an alignment film 4, 5 and 6, respectively, were prepared and used. The prepared polarized lenses all exhibited excellent degrees of polarization, and no significant haze was found. No separation was found. The results are shown in Table 1.

Comparative Example 1

In the preparation of the coating solution for alignment in Example 2, the raw materials were placed into a round bottom flask which was not covered with an insulation material and mixed. Heat was generated in the solution due to water contained in the 0.01 mole/liter hydrochloric acid added as one of the raw materials, and the temperature was elevated at about 50°C. Then, the temperature started to decrease and was to 35°C after 10 minutes. The solution was left standing so that the temperature was lowered to the room temperature over 1 hour, and a raw coating solution for an alignment film was obtained. To 5 g of the obtained raw solution for an alignment film, 30 g of ethanol was added to dilute the raw solution. The diluted solution was stirred, and Coating solution for an alignment film 7 (the content of solid components: 10% by mass based on the amount of the entire coating solution) was obtained.

Then, a polarizing lens was prepared in accordance with the same procedures as those conducted in Example 2 except that Coating solution for an alignment film 7 was used as the coating solution for an alignment film.

The obtained polarizing lens exhibited a degree of polarization as small as 65%. The haze value was 5.5%, and haze of a great degree was found. Many separations were found. The results are shown in Table 1.

Table 1

| | Evaluation | | |
|---|---|---|---|
| | degree of polarization (%) | transparency (haze) | prevention of separation of polarizing layer |
| Example 1 | 99.7 | fair | good |
| Example 2 | 99.5 | fair | good |
| Example 3 | 99.5 | good | good |
| Example 4 | 99.4 | good | good |
| Example 5 | 99.7 | excellent | good |
| Example 6 | 99.7 | excellent | good |
| Example 7 | 99.5 | fair | good |
| Example 8 | 99.3 | fair | good |
| Example 9 | 99.2 | fair | good |
| Comparative Example 1 | 65.0 | poor | poor |

Example 10

(Preparation of a coating solution for an alignment film)

To 85 g of tetraethoxysilane (TEOS) (the molecular weight: 208.3; the trade name: "KBE-04"; manufactured by SHIN-ETSU CHEMICAL Co., Ltd.), 40 g of ethanol was added, and the resultant mixture was stirred. Then, 14.75 g of a 0.01 mole/liter hydrochloric acid (containing water in an amount by mole twice the amount by mole of TEOS) was added under stirring, and the resultant fluid was stirred for 5 minutes until the fluid became transparent.

The mixed solution prepared above was placed into a round bottom flask equipped with a condenser and heated under the refluxing condition for 1 hour by heating the flask by a mantle heater while water at the room temperature was passed through the condenser. During the heating, the solution was stirred, and the temperature of the solution was kept at 75 to 80°C. To the solution treated by heating under the reflexing condition, 1.4 g of aluminum acetylacetonate (1% by mass based on the amount of the raw coating solution for an alignment film) was added and mixed sufficiently. After the resultant solution was stirred for 4 hours while the solution was kept at 50°C, the solution was cooled to the room temperature, and a raw coating solution for an alignment film was obtained. To 5 g of the obtained raw solution for an alignment film, 30 g of ethanol was added to dilute the raw solution. The diluted solution was stirred, and Coating solution for an alignment film 8 (the content of solid components: 2.5% by mass based on the amount of the entire coating solution) was obtained.

(Preparation of an alignment film)

Using a polycarbonate lens for spectacles (the refractive index: 1.59; attached with a hard coat layer; the diameter: 70 mm; the base curve: 4) as the lens substrate, the convex face of the lens, which was the face at the side of incidence of light in the use as a spectacle lens, was coated with Coating solution for an alignment film 8 in accordance with the spin coating process (about 2 ml of the solution supplied at 800 rpm, and the lens kept being rotated for 60 minutes). Then, the formed coating layer was treated by heating at 85°C for 1 hour to cure the coating layer, and an alignment film (a sol-gel film) having a thickness of about 100 nm was prepared. Before the following step of the treatment by abrasion, the substrate having the alignment film was dipped into a 10% by mass aqueous solution of acetic acid for 15 minutes, taken out, washed with pure water and dried.

(Treatment by abrasion)

The obtained alignment film was treated by uniaxial abrasion at a rotation speed of 1000 rpm under an abrasion pressure of 50 g/cm$^3$ for 10 seconds using a urethane foam containing an abrasive (the abrasive: "POLIPLA 203H"; manufactured by FUJIMI Incorporated; particles of $Al_2O_3$ having an average particle diameter of 0.85 $\mu$m; a urethane foam having a shape having a curvature approximately the same as that of the convex face of the spherical lens]. The lens treated by abrasion was washed with pure water and dried.

After the treatment by abrasion had been conducted, a polarizing layer and a layer for protecting the coloring agent were formed in accordance with the same procedures as those conducted in Example 1, and a polarizing lens was prepared.

The degree of polarization, the transparency and the property for preventing separation of the polarizing layer of the obtained polarizing lens were evaluated. The obtained polarizing lens exhibited a degree of polarization as great as 99.6%. The haze value was 1.2%, and no haze was found. No separation was found. The entire face of a polarized lens at the convex side was irradiated with linearly polarized light, and the position of the axis of absorption of polarized light of the lens was adjusted by rotating the lens so that the axis of absorption of polarized light was placed at the same position as the axis of the linearly polarized light. The face of the lens was visually observed at the side of the concave face. It was found that the incident light was cut uniformly on the entire face of the lens, and no unevenness of brightness was found. The results are shown in Table 2.

Example 11

A polarizing lens was prepared by preparing an alignment film, treating by abrasion, forming a polarizing layer and forming a film for protecting a coloring agent in accordance with the same procedures as those conducted in Example 10 except that the alignment film was formed on the concave face (the face at the side opposite to the side of incidence in the use as a spectacle lens) of the lens substrate used in Example 10.

The degree of polarization, the transparency and the property for preventing separation of the polarizing layer of the obtained polarizing lens were evaluated. The obtained polarizing lens exhibited a degree of polarization of 87.5%. The haze value was 1.3%, and no haze was found. No separation was found. The polarized lens was irradiated with polarized light, and the condition of the lens was examined in the same manner as that conducted in Example 10. Unevenness of brightness was found on the face of the lens. The results are shown in Table 2.

Comparative Example 2

(Preparation of a coating solution for an alignment film)

Into a round bottom flask, 85 g of tetraethoxysilane (TEOS) (the molecular weight: 208.3; the trade name: "KBE-04"; manufactured by SHIN-ETSU CHEMICAL Co., Ltd.), 40 g of ethanol and 14.75 g of 0.01 mole/liter hydrochloric acid (containing water in an amount by mole twice the amount by mole of TEOS) were placed and mixed under stirring. During the stirring, heat was generated from the mixed solution due to water contained in 0.01 mole/liter hydrochloric acid added as one of the raw materials, and the temperature was elevated at 50°C. Then, the temperature started to decrease and became 35°C after 10 minutes. The reaction mixture was left standing, and the temperature was lowered to the room temperature over 2 hours to obtain a raw solution for an alignment film. To 5 g of the raw solution for an alignment film obtained as described above, 30 g of ethanol was added to dilute the raw solution. The diluted solution was stirred, and Coating solution for an alignment film 9 (the content of solid components: 10% by mass based on the amount of the entire coating solution) was obtained.

A polarizing lens was prepared by preparing an alignment film, treating by abrasion, forming a polarizing layer and forming a film for protecting a coloring agent in accordance with the same procedures as those conducted in Example 10 except that Coating solution for an alignment film 9 was used as the coating solution for an alignment film. The obtained lens exhibited a degree of polarization as small as 62%. The haze value was 6.2%, and significant haze was found. Many separations were found. The polarized lens was irradiated with polarized light, and the condition of the lens was examined in the same manner as that conducted in Example 10. Unevenness of brightness was found on the face of the lens. The light was not cut on the entire face of the lens since the degree of polarization was smaller than that in Example 10. The results are shown in Table 2.

Comparative Example 3

A polarizing lens was prepared by preparing an alignment film, treating by abrasion, forming a polarizing layer and forming a film for protecting a coloring agent in accordance with the same procedures as those conducted in Example 11 except that Coating solution for an alignment film 9 was used as the coating solution for an alignment film in place of Coating solution for an alignment film 8 used in Example 11, and the alignment film was formed on the concave face (the face at the side opposite to the side of incidence in the use as a spectacle lens) of the lens substrate.

The obtained lens exhibited a degree of polarization as small as 65%. The haze value was 5.5%, and significant haze was found. Many separations were found. The polarized lens was irradiated with polarized light, and the condition of the lens was examined in the same manner as that conducted in Example 10. Unevenness of brightness was found on the face of the lens at portions corresponding to the portions of separation. The light was not cut on the entire face of the lens since the degree of polarization was smaller than that in Example 10. The results are shown in Table 2.

Table 2

| | Evaluation | | | |
|---|---|---|---|---|
| | degree of polarization (%) | transparency (haze) | separation of polarizing layer | unevenness of transmitted light |
| Example 10 | 99.6 | fair | good | excellent |
| Example 11 | 87.5 | fair | good | poor |
| Comparative Example 2 | 62.0 | poor | poor | poor |
| Comparative Example 3 | 65.0 | poor | poor | fair |

Industrial Applicability

In accordance with the present invention, a process for producing a polarizing element such as a polarizing lens exhibiting excellent properties in which a polarizing element can be produced in simple steps, and separation of the polarizing layer in the steps of the production can be prevented, is provided.

The obtained polarizing element can be widely used for optical applications such as spectacle lenses, sun glasses, display instruments, light transfer instruments, window panes of buildings and window of automobiles, and, in particular, can be advantageously used for plastic lenses for spectacles.

Reference Signs Lists

1: A substrate
2: A hard coat layer
3: A layer for tight adhesion
4: A sol-gel film
5: An alignment layer
6: A polarizing layer (a layer of an aligned coloring agent)
7: A protective layer for a coloring agent (a protective layer)
8: A functional film (a water-repelling film or the like)

**Claims**

1. A process for producing a polarizing element which comprises the following Steps I to V:

Step I which comprises preparing a coating solution for an alignment film from a mixture comprising an alkoxysilane and water;
Step II which comprises coating a substrate with the coating solution for an alignment film prepared in step I to form a sol-gel film on the substrate;
Step III which comprises treating the sol-gel film by abrasion in a uniaxial direction to form an alignment layer having marks of abrasion in the uniaxial direction;
Step IV which comprises aligning a dichroic coloring agent by deposition on the alignment layer formed in step III to form a polarizing layer; and
Step V which comprises forming a protective layer for fixing the coloring agent on the polarizing layer formed in step IV;

**characterized in that** Step I comprises treating a mixture comprising (A) an alkoxysilane represented by following general formula (1) and/or a hexaalkoxydisiloxane represented by following general formula (2), (B) water and (C) an alcohol by heating at 40 to 120°C for 0.5 to 24 hours to prepare the coating solution for an alignment film,

$$Si(OR^1)_a(R^2)_{4-a} \qquad (1)$$

$$(R^3O)_3Si\text{-}O\text{-}Si(OR^4)_3 \qquad (2)$$

wherein $R^1$, $R^3$ and $R^4$ each independently represent an alkyl group having 1 to 5 carbon atoms, $R^2$ represents an alkyl group having 1 to 10 carbon atoms, and a represents a number of 3 or 4.

2. The process for producing a polarizing element according to Claim 1, wherein the mixture comprising Components (A) to (C) in Step I is a mixture comprising Component (A) and, based on an amount of Component (A), 0.5 to 3 mole equivalents of water of Component (B) and 20 to 500% by mass of the alcohol of Component (C).

3. The process for producing a polarizing element according to any one of Claims 1 and 2, wherein the mixture comprising Components (A) to (C) is heated under a refluxing condition in the treatment by heating in Step I.

4. The process for producing a polarizing element according to any one of Claims 1 to 3, wherein Step I comprises adding (D) an aluminum chelate in an amount of 0.3 to 5% by mass based on an amount of Component (A) to the mixture obtained by treating the mixture comprising Components (A) to (C) by heating and treating an obtained mixture by heating to prepare a coating solution for an alignment film.

5. The process for producing a polarizing element according to Claim 4, wherein the aluminum chelate of Component (D) is at least one compound selected from a group consisting of aluminum acetylacetonate, ethyl acetoacetate aluminum diisopropylate, aluminum tris(ethyl acetoacetate), alkyl acetoacetate aluminum diisopropylates, aluminum monoacetylacetonate bis(ethyl acetoacetate), aluminum tris(acetylacetonate) and aluminum monoisopropoxy monooleoxy ethyl acetoacetate.

6. The process for producing a polarizing element according to any one of Claims 1 to 5, which comprises a step comprising treating the sol-gel film prepared in Step II by dipping into any one of an aqueous solution of an organic acid, an aqueous solution of ammonia and an aqueous solution of an amine.

7. The process for producing a polarizing element according to any one of Claims I to 6, wherein Component (A) is at least one compound selected from a group consisting of tetraethoxysilane, tetramethoxysilane, methyltrimethoxysilane, methyltriethoxysilane, tetraisopropoxysilane, methyltriisopropoxysilane, hexaethoxydisiloxane and hexamethoxydisiloxane.

8. The process for producing a polarizing element according to Claim 1, wherein the polarizing element is a polarizing lens, a thermoplastic resin is used for a lens substrate, and the polarizing lens comprises a polarizing layer disposed on a face at a side of incidence, the process comprising the following Steps I to V:

Step I which comprises treating a mixture comprising (A) an alkoxysilane represented by following general formula (1) and/or a hexaalkoxydisiloxane represented by following general formula (2), (B) water and (C) an alcohol by heating at 40 to 120°C for 0.5 to 24 hours to prepare a coating solution for an alignment film,

$$Si(OR^1)_a(R^2)_{4-a} \qquad (1)$$

$$(R^3O)_3Si-O-Si(OR^4)_3 \qquad (2)$$

wherein $R^1$, $R^3$ and $R^4$ each independently represent an alkyl group having 1 to 5 carbon atoms, $R^2$ represents an alkyl group having 1 to 10 carbon atoms, and a represents a number of 3 or 4;
Step II which comprises coating a face of the lens substrate which is at a side of incidence in the produced polarizing lens with the coating solution for an alignment film prepared in step I to form a sol-gel film on the substrate;
Step III which comprises treating the sol-gel film by abrasion in a uniaxial direction to form an alignment layer having marks of abrasion in the uniaxial direction;
Step IV which comprises aligning a dichroic coloring agent by deposition on the alignment layer formed in step III to form a polarizing layer; and
Step V which comprises forming a protective layer for fixing the coloring agent on the polarizing layer formed in step IV.

9. The process for producing a polarizing lens according to Claim 8, wherein the thermoplastic resin is polycarbonate or polymethyl methacrylate.

10. The process for producing a polarizing lens according to any one of Claims 8 and 9, wherein the mixture comprising Components (A) to (C) in Step I is a mixture comprising Component (A) and, based on an amount of Component (A), 0.5 to 3 mole equivalents of water of Component (B) and 20 to 500% by mass of the alcohol of Component (C).

11. The process for producing a polarizing lens according to any one of Claims 8 to 10, wherein the mixture comprising Components (A) to (C) is heated under a refluxing condition in the treatment by heating in Step I.

12. The process for producing a polarizing lens according to any one of Claims 8 to 11, wherein Component (A) is at least one compound selected from a group consisting of tetraethoxysilane, tetramethoxysilane, methyltrimethoxysilane, methyltriethoxysilane, tetraisopropoxysilane, methyltriisopropoxysilane, hexaethoxydisiloxane and hexamethoxydisiloxane.

13. The process for producing a polarizing lens according to any one of Claims 8 to 12, wherein the face of the lens substrate which is at a side of incidence in the produced polarizing lens has a convex shape, and a sol-gel film is prepared by coating the face of the lens substrate which is at a side of incidence in the produced polarizing lens with the coating solution for an alignment film prepared in Step I.

**Patentansprüche**

1. Verfahren zur Herstellung eines Polarisationselements, welches die folgenden Schritte I bis V umfasst:

Schritt I, welcher die Herstellung einer Beschichtungslösung für einen Ausrichtungsfilm aus einem Gemisch, umfassend ein Alkoxysilan und Wasser, umfasst;
Schritt II, welcher die Beschichtung eines Substrats mit der Beschichtungslösung für einen Ausrichtungsfilm, hergestellt in Schritt I, unter Bildung eines Sol-Gel-Films auf dem Substrat umfasst;
Schritt III, welcher die Behandlung des Sol-Gel-Films durch Schleifen in uniaxialer Richtung unter Bildung einer Ausrichtungsschicht mit Abschleifmarken in uniaxialer Richtung umfasst;
Schritt IV, welcher die Ausrichtung eines dichroitischen Färbemittels durch Abscheidung auf die in Schritt III gebildete Ausrichtungsschicht unter Bildung einer Polarisationsschicht umfasst; und
Schritt V, welcher die Bildung einer Schutzschicht zur Fixierung des Färbemittels auf der in Schritt IV gebildeten Polarisationsschicht umfasst;

**dadurch gekennzeichnet, dass** Schritt I die Behandlung eines Gemisches, umfassend (A) ein Alkoxysilan, dargestellt durch die folgende allgemeine Formel (1) und/oder ein Hexaalkoxydisiloxan, dargestellt durch die folgende allgemeine Formel (2), (B) Wasser und (C) einen Alkohol, durch Erwärmen auf 40 bis 120°C für 0,5 bis 24 Stunden unter Herstellung der Beschichtungslösung für einen Ausrichtungsfilm umfasst,

$$Si(OR^1)_a(R^2)_{4-a} \qquad (1)$$

$$(R^3O)_3Si\text{-}O\text{-}Si(OR^4)_3 \qquad (2)$$

worin $R^1$, $R^3$ und $R^4$ jeweils unabhängig eine Alkylgruppe mit 1 bis 5 Kohlenstoffatomen darstellen, $R^2$ eine Alkylgruppe mit 1 bis 10 Kohlenstoffatomen darstellt und a die Zahl 3 oder 4 darstellt.

2. Verfahren zur Herstellung eines Polarisationselements gemäß Anspruch 1, wobei das die Komponenten (A) bis (C) in Schritt I umfassende Gemisch ein Gemisch ist, welches die Komponente (A) und, bezogen auf die Menge der Komponente (A), 0,5 bis 3 Moläquivalente Wasser von Komponente (B) und 20 bis 500 Massen-% des Alkohols der Komponente (C) umfasst.

3. Verfahren zur Herstellung eines Polarisationselements gemäß Anspruch 1 oder 2, wobei das die Komponenten (A) bis (C) umfassende Gemisch in der Behandlung durch Erwärmen in Schritt I unter Rückflussbedingungen erhitzt wird.

4. Verfahren zur Herstellung eines Polarisationselements gemäß einem der Ansprüche 1 bis 3, wobei der Schritt I die Zugabe von (D) einem Aluminiumchelat in einer Menge von 0,3 bis 5 Massen-%, bezogen auf die Menge von Komponente (A), zu dem Gemisch, erhalten durch Behandlung des die Komponenten (A) bis (C) umfassenden Gemischs durch Erwärmen, und Behandeln des erhaltenen Gemisches durch Erwärmen unter Herstellung einer Beschichtungslösung für einen Ausrichtungsfilm umfasst.

5. Verfahren zur Herstellung eines Polarisationselements gemäß Anspruch 4, wobei das Aluminiumchelat von Komponente (D) wenigstens eine Verbindung ist, ausgewählt aus der Gruppe, bestehend aus Aluminiumacetylacetonat, Ethylacetoacetataluminiumdiisopropylat, Aluminiumtris(ethylacetoacetat), Alkylacetoacetataluminiumdiisopropylaten, Aluminiummonoacetylacetonatbis(ethylacetoacetat), Aluminiumtris(acetylacetonat) und Aluminiummonoisopropoxymonooleoxyethylacetoacetat.

6. Verfahren zur Herstellung eines Polarisationselements gemäß einem der Ansprüche 1 bis 5, welches einen Schritt, umfassend die Behandlung des in Schritt II hergestellten Sol-Gel-Films durch Eintauchen in eine aus einer wässrigen Lösung einer organischen Säure, einer wässrigen Lösung von Ammoniak und einer wässrigen Lösung von einem Amin umfasst.

7. Verfahren zur Herstellung eines Polarisationselements gemäß einem der Ansprüche 1 bis 6, wobei Komponente (A) wenigstens eine Verbindung ist, ausgewählt aus der Gruppe, bestehend aus Tetraethoxysilan, Tetramethoxysilan, Methyltrimethoxysilan, Methyltriethoxysilan, Tetraisopropoxysilan, Methyltriisopropoxysilan, Hexaethoxydisiloxan und Hexamethoxydisiloxan.

8. Verfahren zur Herstellung eines Polarisationselements gemäß Anspruch 1, wobei das Polarisationselement eine

**EP 2 180 353 B1**

Polarisationslinse ist, ein thermoplastisches Harz als Linsensubstrat verwendet wird, und die Polarisationslinse eine Polarisationsschicht umfasst, angeordnet auf einer Fläche an der Einfallsseite, wobei das Verfahren die folgenden Schritte I bis V umfasst:

Schritt I, welcher die Behandlung eines Gemisches, umfassend (A) ein Alkoxysilan, dargestellt durch die folgende allgemeine Formel (1) und/oder ein Hexaalkoxydisiloxan, dargestellt durch die folgende allgemeine Formel (2), (B) Wasser und (C) einen Alkohol, durch Erwärmen auf 40 bis 120°C für 0,5 bis 24 Stunden unter Herstellung der Beschichtungslösung für einen Ausrichtungsfilm umfasst,

$$Si(OR^1)_a(R^2)_{4-a} \qquad (1)$$

$$(R^3O)_3Si\text{-}O\text{-}Si(OR^4)_3 \qquad (2)$$

worin $R^1$, $R^3$ und $R^4$ jeweils unabhängig eine Alkylgruppe mit 1 bis 5 Kohlenstoffatomen darstellen, $R^2$ eine Alkylgruppe mit 1 bis 10 Kohlenstoffatomen darstellt und a die Zahl 3 oder 4 darstellt;

Schritt II, welcher die Beschichtung einer Fläche des Linsensubstrats, welche auf der Einfallsseite der hergestellten Polarisationslinse liegt, mit der Beschichtungslösung für einen Ausrichtungsfilm, hergestellt in Schritt I, unter Bildung eines Sol-Gel-Films auf dem Substrat, umfasst;

Schritt III, welcher die Behandlung des Sol-Gel-Films durch Schleifen in uniaxialer Richtung unter Bildung einer Ausrichtungsschicht mit Abschleifmarken in uniaxialer Richtung umfasst;

Schritt IV, welcher die Ausrichtung eines dichroitischen Färbemittels durch Abscheidung auf die in Schritt III gebildete Ausrichtungsschicht unter Bildung einer Polarisationsschicht umfasst; und

Schritt V, welcher die Bildung einer Schutzschicht zur Fixierung des Färbemittels auf der in Schritt IV gebildeten Polarisationsschicht umfasst.

9. Verfahren zur Herstellung einer Polarisationslinse gemäß Anspruch 8, wobei das thermoplastische Harz Polycarbonat oder Polymethylmethacrylat ist.

10. Verfahren zur Herstellung einer Polarisationslinse gemäß einem der Ansprüche 8 und 9, wobei das Gemisch, umfassend Komponenten (A) bis (C), in Schritt I ein Gemisch ist, umfassend Komponente (A) sowie, bezogen auf Komponente (A), 0,5 bis 3 Moläquivalente Wasser von Komponente (B) und 20 bis 500 Massen-% des Alkohols von Komponente (C).

11. Verfahren zur Herstellung einer Polarisationslinse gemäß einem der Ansprüche 8 bis 10, wobei das die Komponenten (A) bis (C) umfassende Gemisch unter Rückflussbedingungen in der Behandlung durch Erwärmen in Schritt I erwärmt wird.

12. Verfahren zur Herstellung einer Polarisationslinse gemäß einem der Ansprüche 8 bis 11, wobei Komponente (A) wenigstens eine Verbindung ist, ausgewählt aus der Gruppe, bestehend aus Tetraethoxysilan, Tetramethoxysilan, Methyltrimethoxysilan, Methyltriethoxysilan, Tetraisopropoxysilan, Methyltriisopropoxysilan, Hexaethoxydisiloxan und Hexamethoxydisiloxan.

13. Verfahren zur Herstellung einer Polarisationslinse gemäß einem der Ansprüche 8 bis 12, wobei die Fläche des Linsensubstrats, welche auf der Einfallsseite in der hergestellten Polarisationslinse liegt, eine konvexe Form hat, und ein Sol-Gel-Film durch Beschichten der Fläche des Linsensubstrats, welche auf der Einfallsseite in der hergestellten Polarisationslinse ist, mit der Beschichtungslösung für einen Ausrichtungsfilm, hergestellt in Schritt I, beschichtet wird.

**Revendications**

1. Procédé pour produire un élément polarisant qui comprend les étapes suivantes I à V :

Étape I comprenant la préparation d'une solution d'enduction pour un film d'alignement à partir d'un mélange comprenant un alkoxysilane et de l'eau ;

Étape II comprenant l'enduction d'un substrat, avec la solution d'enduction pour un film d'alignement préparé à l'Étape I, afin de former un film sol-gel sur le substrat ;

Étape III comprenant le traitement du film sol-gel par abrasion dans une direction uniaxiale pour former une couche d'alignement ayant des marques d'abrasion dans la direction uniaxiale ;

Étape IV comprenant l'alignement d'un agent de coloration dichroïque par dépôt sur la couche d'alignement formée à l'Étape III pour former une couche de polarisation ; et

Étape V comprenant la formation d'une couche protectrice pour fixer l'agent colorant sur la couche de polarisation formée à l'Étape IV ;

**caractérisé en ce que** l'Étape I comprend le traitement d'un mélange incluant (A) un alkoxysilane représenté par la formule générale suivante (1) et/ou un hexaalkoxydisiloxane représenté par la formule générale suivante (2), (B) de l'eau et (C) un alcool, en chauffant de 40 à 120°C pendant 0,5 à 24 heures pour préparer la solution d'enduction pour un film d'alignement,

$$Si(OR^1)a(R^2)_{4-a} \qquad (1)$$

$$(R^3O)_3Si-O-Si(OR^4)_3 \qquad (2)$$

dans lequel $R^1$, $R^3$ et $R^4$ représentent chacun de façon indépendante un groupe alkyle ayant de 1 à 5 atomes de carbone, $R^2$ représente un groupe alkyle ayant de 1 à 10 atomes de carbone, et a représente un nombre entre 3 et 4.

2. Procédé pour produire un élément polarisant selon la revendication 1, dans lequel le mélange comprenant les composants (A) à (C) de l'Étape I est un mélange comprenant le composant (A) et, sur la base d'une quantité du composant (A), 0,5 à 3 mole équivalents d'eau du composant (B) et 20 à 500 % en masse de l'alcool du composant (C).

3. Procédé de production d'un élément polarisant selon l'une quelconque des revendications 1 et 2, dans lequel le mélange comprenant les composants (A) à (C) est chauffé sous une condition de refluxage dans le traitement par chauffage de l'Étape I.

4. Procédé de production d'un élément polarisant selon l'une quelconque des revendications 1 à 3, dans lequel l'Étape I comprend l'ajout (D) d'un chélate d'aluminium dans une quantité de 0,3 à 5% en masse, sur la base d'une quantité du composant (A) au mélange obtenu par traitement du mélange comprenant les composants (A) à (C), en chauffant et en traitant un mélange obtenu par chauffage pour préparer une solution d'enduction pour un film d'alignement.

5. Procédé de production d'un élément polarisant selon la revendication 4, dans lequel le chélate d'aluminium du composant (D) est au moins un composé sélectionné parmi un groupe constitué de l'acétylacétonate d'aluminium, du diisopropylate d'aluminium éthyl-acétoacétate, de l'aluminium tris(éthyl acétoacétate), des diisopropylates d'aluminium alkyl acétoacétate, du bis(éthyl acétoacétate) monoacétylacétonate d'aluminium, du tris(acétylacétonate) d'aluminium et de l'acétoacétate éthyle monooleoxy monoisopropoxy d'aluminium.

6. Procédé de production d'un élément polarisant selon l'une quelconque des revendications 1 à 5, qui comprend une étape incluant le traitement du film sol-gel préparé à l'Étape II en trempant dans l'une quelconque des solutions suivantes : solution aqueuse d'un acide organique, solution aqueuse d'ammoniaque ou solution aqueuse d'une amine.

7. Procédé de production d'un élément polarisant selon l'une quelconque des revendications 1 à 6, dans lequel le composant (A) est au moins un composé sélectionné parmi le groupe constitué du tétraéthoxysilane, du tétraméthoxysilane, du méthyltriméthoxysilane, du méthyltriethoxysilane, de la tétraisopropoxysilane, de la méthyltriisopropoxysilane, de l'hexaethoxydisiloxane et de l'hexamethoxydisiloxane.

8. Procédé de production d'un élément polarisant selon la revendication 1, dans lequel l'élément polarisant est une lentille polarisante, une résine thermoplastique est utilisée pour un substrat de lentille et la lentille polarisante comprend une couche de polarisation disposée, pour une face, sur un côté d'incidence, le procédé comprenant les étapes suivantes I à V :

Étape I comprenant le traitement d'un mélange incluant (A) un alkoxysilane représenté par la formule générale suivante (1) et/ou un hexaalkoxydisiloxane représenté par la formule générale suivante (2), (B) l'eau et (C) un alcool en chauffant de 40 à 120°C pendant 0,5 à 24 heures pour préparer une solution d'enduction pour un film d'alignement,

$$Si(OR^1)a(R^2)_{4-a} \qquad (1)$$

$$(R^3O)_3Si\text{-}O\text{-}Si(OR^4)_3 \qquad (2)$$

dans lequel $R^1$, $R^3$ et $R^4$ représentent chacun de façon indépendante un groupe alkyle ayant de 1 à 5 atomes de carbone, $R^2$ représente un groupe alkyle ayant de 1 à 10 atomes de carbone, et a représente un nombre entre 3 et 4 ;

Étape II comprenant l'enduction d'une face du substrat de lentille qui est sur un côté d'incidence dans la lentille polarisante, produite avec la solution d'enduction pour un film d'alignement préparé à l'Étape I, afin de former un film sol-gel sur le substrat ;

Étape III comprenant le traitement du film sol-gel par abrasion dans une direction uniaxiale pour former une couche d'alignement ayant des marques d'abrasion dans la direction uniaxiale ;

Étape IV comprenant l'alignement d'un agent colorant dichroïque par dépôt sur la couche d'alignement formée à l'Étape III pour former une couche polarisante ; et

Étape V comprenant la formation d'une couche protectrice pour fixer l'agent colorant sur la couche de polarisation formée à l'Étape IV.

9. Procédé pour produire une lentille polarisante selon la revendication 8, dans lequel la résine thermoplastique est le polycarbonate ou le polyméthacrylate de méthyle.

10. Procédé pour produire une lentille polarisante selon l'une quelconque-des revendications 8 et 9, dans laquelle le mélange comprenant les composants (A) à (C) de l'Étape I est un mélange comprenant le composant (A) et, sur la base de la quantité du composant (A), 0,5 à 3 mole équivalents d'eau du composant (B) et 20 à 500% en masse d'alcool du composant (C).

11. Procédé pour produire une lentille polarisante selon l'une quelconque des revendications 8 à 10, dans lequel le mélange comprenant les composants (A) à (C) est chauffé sous une condition de refluxage pendant le traitement par chauffage de l'Étape I.

12. Procédé pour produire une lentille polarisante selon l'une quelconque des revendications 8 à 11, dans lequel le composant (A) est au moins un composé sélectionné parmi le groupe constitué de la tétraéthoxysilane, de la tétraméthoxysilane, de la méthyltriméthoxysilane, de la méthyltriethoxysilane, de la tétraisopropoxysilane, de la méthyltriisopropoxysilane, de l'hexaethoxydisiloxane et de l'hexaméthoxydisiloxane.

13. Procédé pour produire une lentille polarisante selon l'une quelconque des revendications 8 à 12, dans laquelle la face du substrat de lentille qui est sur un côté d'incidence dans la lentille polarisante produite a une forme convexe, et un film sol-gel est préparé en enduisant la face du substrat de lentille qui est sur un côté d'incidence dans la lentille polarisante produite avec la solution d'enduction pour un film d'alignement préparé à l'Étape 1.

Fig 1

(A)

(B)

(C)

(D)

(E)

**REFERENCES CITED IN THE DESCRIPTION**

**Patent documents cited in the description**

- WO 06081006 A
- JP 2007520739 A
- JP 2007077327 A
- US 2400877 A
- US 4865668 A
- JP 2002527786 A